**Europäisches Patentamt**

**European Patent Office**

**Office européen des brevets**

(19)

(11) Veröffentlichungsnummer: **0 273 231 B1**

## EUROPÄISCHE PATENTSCHRIFT

(12)

(45) Veröffentlichungstag der Patentschrift: **05.02.92**

(51) Int. Cl.⁵: **C01C 1/04**, B01J 8/04

(21) Anmeldenummer: **87117925.5**

(22) Anmeldetag: **04.12.87**

(54) **Vorrichtung zum Regeln insbesondere eines Ammoniakkonverters.**

(30) Priorität: **22.12.86 DE 3643856**

(43) Veröffentlichungstag der Anmeldung:
**06.07.88 Patentblatt 88/27**

(45) Bekanntmachung des Hinweises auf die
Patenterteilung:
**05.02.92 Patentblatt 92/06**

(84) Benannte Vertragsstaaten:
**AT BE DE ES FR GB IT NL**

(56) Entgegenhaltungen:
**EP-A- 0 114 138**
**DE-A- 3 224 422**

(73) Patentinhaber: **Uhde GmbH**
**Friedrich-Uhde-Strasse 15 Postfach 262**
**W-4600 Dortmund 1(DE)**

(72) Erfinder: **Herbort, Hans-Joachim, Dipl.-Ing.**
**Unnaer Strasse 65b**
**W-5758 Fröndenberg(DE)**
Erfinder: **Graeve, Heinz, Dipl.-Ing.**
**Bittermarkstrasse 33a**
**W-4600 Dortmund 50(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

## Beschreibung

Die Erfindung richtet sich auf eine Vorrichtung zum Regeln insbesondere eines Ammoniakkonverters mit wenigstens einem vom Prozeßgas zunächst beaufschlagten Wärmetauscher und wenigstens einem vom Prozeßgas nachfolgend beaufschlagten Katalysatorbett, wobei das Prozeßgas nach dem Durchströmen des Katalysatorbettes wiederum als Wärmeaustauschgas den Wärmetauscher durchströmt, wobei der Wärmetauscher und um diesen Wärmetauscher herum das erste Katalysatorbett rotationssymmetrisch zu einem zentrischen Rohr angeordnet sind, durch das ein Regelgas für die Temperatursteuerung strömt.

Aus dem Dokument EP-A-0 114 138 (I) ist eine gattungsgemäße Vorrichtung bekannt, in der ein zentrisches Rohr zur Temperaturregelung als Regelgaszuführrohr einen Wärmetauscher vollständig durchsetzt, doch erfolgt die Zumischung des Regelgases erst nachdem das Prozeßgas das erste Katalysatorbett bereits durchströmt hat, das erste Katalysatorbett kann also selbst nicht mit dem Regelgas beaufschlagt werden.

Es ist auch bekannt, bei Vorrichtungen zur Durchführung exothermer, katalytischer Gasreaktionen für die Ammoniak- oder Methanolsynthese in die Druckbehälter zur Regelung über eine gesonderte Gaszufuhr z.B. kaltes Frischgas in den Prozeßgasstrom in einer Vorkammer desjenigen Wärmetauschers einzuspeisen, der dem ersten Katalysatorbett zugeordnet ist, wobei bei der bekannten Vorrichtung in den Druckbehälter zwei Katalysatorbetten mit jeweils konzentrisch in der Mitte angeordnetem Wärmetauscher vorgesehen sind. Dies ergibt sich aus dem Patent DE-C-33 43 114 der Anmelderin.

Aus der DE-C 27 10 247 ist ein Verfahren bekannt, den Prozeßgasstrom insgesamt aus zwei Teilströmen zusammenzusetzen, wobei wenigstens einer der Teilströme in Temperatur und/oder Menge einstellbar ist, um so die gewünschten Prozeßbedingungen zu erreichen. Die Zusammenfügung der Gasströme erfolgt in jedem Falle vor Eintritt in das erste Katalysatorbett.

Aufgabe der Erfindung ist die Schaffung einer Lösung, mit der das Hinzuspeisen von Regelgas, Quentschgas oder eines Teiles des Prozeßgases mit anderen Temperaturen und/oder sonstigen Bedingungen an jeder Stelle eines Reaktors in die jeweiligen Gasströme möglich ist, wobei die Lösung so getroffen werden soll, daß die zumischung bzw. die by-pass-Leitung vollständig abschließbar oder teilweise beaufschlagbar ausgebildet ist bzw. vollständig geöffnet werden kann.

Bei einer Vorrichtung der eingangs bezeichneten Art wird diese Aufgabe gemäß der Erfindung dadurch gelöst, daß das zentrische Rohr das Katalysatorbett vollständig durchsetzt und an seinem unteren Ende mit regelbaren Auslässen zur wenigstens teilweisen Zumischung des Regelgases in den Prozeßgasstrom vor dessen Durchströmen des Katalysatorbettes und zur Zumischung des Regelgasstromes in den Prozeßgasstrom nach dessen Durchströmen des Katalysatorbettes und des Wärmetauschers versehen ist.

Mit dieser Lösung wird durch das zentrische, regelbare Rohr nicht nur erreicht, daß z.B. das Regelgas in einer Extremstellung quer durch den Wärmetauscher erst dann in den Prozeßgasstrom einspeisbar ist, wenn dieser bereits das erste Katalysatorbett und nachfolgend den Wärmetauscher durchströmt hat, d.h. z.B. in den Gasstrom, der das nachfolgende Katalysatorbett beaufschlagen soll, sondern es ist auch möglich, Regelgas vor das erste Katalysatorbett 1 zu speisen und in Zwischenstellungen sowohl vor das erste Katalysatorbett als auch vor das nachfolgende Katalysatorbett.

In Ausgestaltung sieht die Erfindung vor, daß die den Wärmetauscher durchsetzenden Führungsrohre für das Prozeßgas das zentrische, regelbare Rohr im Abstand hierzu umgeben. Diese Bauweise hat den Vorteil, daß die Gestaltung sowohl des Wärmetauschers als auch des zentrisch hindurchtretenden by-pass-Rohres vergleichsweise einfach ist, im Regelfalle können auf besondere Rohrkrümmer od. dgl. dann verzichtet werden.

In besonders vorteilhafter Ausgestaltung sieht die Erfindung auch vor, daß die Verteilungsöffnungen des zentrischen Rohres in Abhängigkeit zueinander synchron steuerbar ausgebildet sind. Mit dieser Regelung lassen sich nicht nur einige Regelstellungen erreichen, etwa derart, daß ein Auslaß am Regelrohr vollständig geschlosen ist, während der andere vollständig geöffnet ist und umgekehrt, sondern man kann auch jegliche Zwischenstellungen synchron einstellen, d.h., das Regelgas kann in jeder gewünschten Teilmenge den jeweiligen Prozeßgasströmen zugemischt werden.

Zweckmäßig ist es, wenn zur Durchsatzregelung das zentrische Rohr einen mit axialen Durchbrechungen versehenen Schließkolben aufweist, wobei das Durchströmen des Regelgases durch Öffnungen in dem Rohr in einem Strömungskanal, in den das Prozeßgas nach dem ersten Durchströmen des Wärmetauschers gelangt, gesteuert werden kann. Ohne daß die Erfindung hierauf beschränkt wäre, läßt sich diese Steuermöglichkeit besonders einfach durchführen. So kann der mit axialen Durchbrechungen versehene Kolben entweder durch Schub die seitlichen Öffnungen im unteren Teil des zentrischen Rohres teilweise öffnen oder verschließen, dies kann aber auch durch Rotation bei einer entsprechenden Kolbengestaltung geschehen.

Bei der vorgenannten Ausgestaltung der Erfindung, einen Teil des Steuerorganges als Zylinder auszugestalten, ist es zweckmäßig, daß das untere freie Ende des zentrischen Rohres in eine Verteilerkammer für das Prozeßgas, welches bereits zum zweiten Mal den Wärmetauscher durchströmt hat, mündet und über ein mit dem Kolben verbundenes Dichtelement vollständig abdichtbar ausgebildet ist.

Insbesondere bei mehreren Katalysatorbetten mit dazu konzentrisch im Inneren angeordneten Wärmetauschern sieht die Erfindung vor, daß das zentrische Rohr und/oder die Betätigung der regelbaren Auslässe wenigstens einen weiteren Wärmetauscher durchsetzen. Hierbei gilt wiederum das eingangs Ausgeführte, nämlich daß der besondere Vorteil der Erfindung in der einfachen Steuerung von Regelgasströmen besteht, wobei die jeweilige Situation sehr exakt steuerbar ist, da Regelgasströme immer dort eingesetzt werden können, wo sie benötigt werden.

Im einer spezielleren Ausgestaltung ist erfindungsgemäß vorgesehen, daß bei einer zentrischen Zuströmung von den Behältermantel kühlendem, kalten Prozeßgas von unten durch ein drittes Katalysatorbett in die Vorkammer des zweiten Wärmetauschers ein Regelorgan vorgesehen ist, welches die Zumischung wenigstens eines Teiles des kälteren Mantelgases in das Prozeßgas vor Eintritt in das dritte Katalysatorbett ermöglicht. Hiermit kann das kältere Mantelgas nicht nur den üblichen Aufheizweg durch den zweiten und ersten Wärmetauscher nehmen, es ist damit gleichzeitig möglich, einen Teil als Regelgas für das dritte Katalysatorbett zu benutzen, umgekehrt können natürlich auch durch diese Schaltung die Mengen an Mantelgas, die den oberen ersten und zweiten Katalysatorbetten zugeführt werden, gesteuert werden.

Schließlich kann es vorteilhaft sein, wenn das erste zentrische Rohr von einem zweiten zentrischen Rohr durchsetzt wird, wobei das zweite zentrische Rohr bis unter den folgenden Wärmetauscher geführt ist und der Zumischung von Regelgas in den Prozeßgasstrom vor dem dritten Katalysatorbett dient.

An dieser Stelle sei bemerkt, daß die stufige Absetzung von zentrisch ineinanderliegenden, das Zuströmen mehrerer Regelgasströme ermöglichenden Leitungen nicht auf diese Zweifachausbildung beschränkt ist. Je nach Stufenanzahl kann hier auch eine Mehrzahl derartiger konzentrischer Leitungen vorgesehen sein.

Die Erfindung ist nachstehend anhand der Zeichnung beispielsweise näher erläutert. Diese zeigt in

Fig. 1 einen Schnitt durch eine Vorrichtung nach der Erfindung mit zwei Katalysatorbetten und einer Regeleinrichtung,

Fig. 2 den Schnitt durch ein weiteres Ausführungsbeispiel mit drei Katalysatorbetten,

Fig. 3 ein abgewandeltes Ausführungsbeipiel nach der Gestaltung gemäß Fig. 2,

Fig. 4 ein weiteres Ausführungsbeispiel der Erfindung sowie in

Fig. 5 eine abgewandelte Gestaltung einer Regelung nach dem Ausführungsbeispiel gemäß Fig. 4.

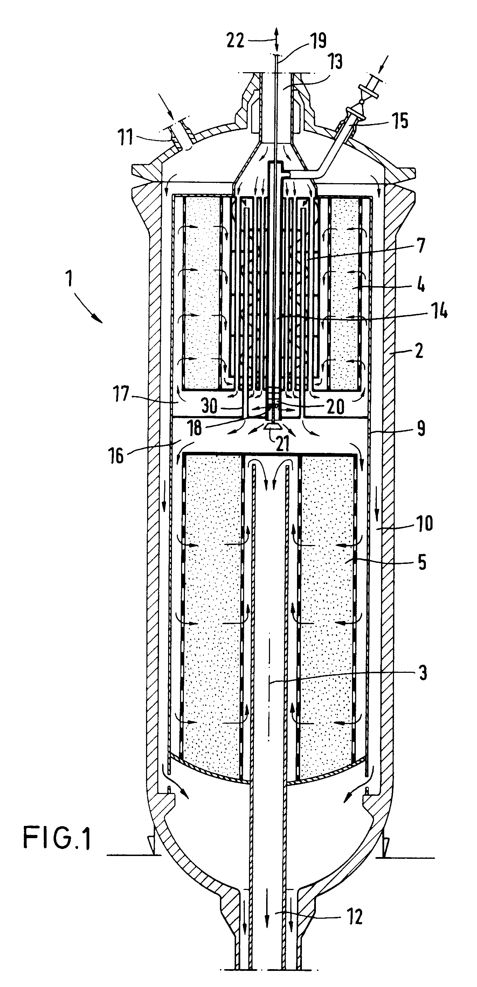

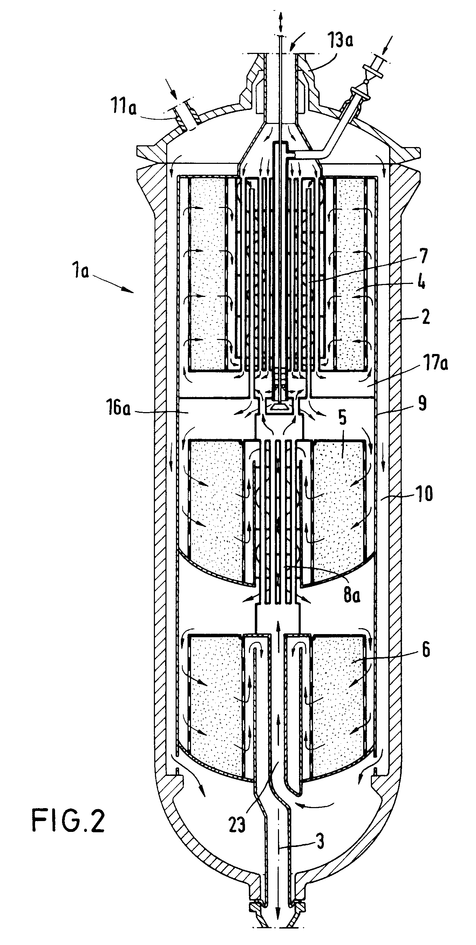

Die allgemein mit 1 bezeichnete Vorrichtung wird im wesentlichen von einen Druckbehälter 2 gebildet, in dem im dargestellten Beispiel gemäß Fig. 1 zwei Katalysatorbetten, in den Ausführungsbeispielen gemäß Fig. 2 bis 4 drei Katalysatorbetten konzentrisch zur Mittelachse 3 angeordnet sind. Das obere und erste Katalysatorbett ist mit 4 bezeichnet, das zweite mit 5 und das untere und letzte (bei den Ausführungsbeispielen gemäß Fig. 2 bis 4) mit 6.

Im Inneren des ersten Katalysatorbettes 4 ist ein erster Wärmetauscher 7 angeordnet, wobei bei den Ausführungsbeispielen gemäß Fig. 2 bis 4 im Inneren des zweiten Katalysatorbettes 5 ein zweiter Wärmetauscher 8 angeordnet ist, wobei im letzteren Falle die Wärmetauscher 7 und 8 funktionsmäßig hintereinandergeschaltet sind. Die Katalysatoren einschließlich der Wärmetauscher sind von einer Hüllwand 9 umgeben, die so bemessen ist, daß sich zwischen der Innenfläche der Behälterwand der Hüllwand 9 ein durchgehender Ringraum 10 bildet.

Beim Ausführungsbeispiel gemäß Fig. 1 strömt ein Kühlgas oben in die Vorrichtung 1 durch einen Stutzen 11 ein, durchströmt den Ringraum 10 und tritt unten zusammen mit dem Kreislaufgas durch einen Stutzen 12 aus. Der obere Eintrittsstutzen für das Kreislaufgas ist mit 13 bezeichnet. Konzentrisch im Inneren des Wärmetauschers 7 ist ein Rohr 14 vorgesehen, welches über einen Zuleitungsstutzen 15 von Gas zur Regelung beaufschlagbar ist.

Dieses zentrische Rohr mündet in einer Verteilerkammer 16 für das Prozeßgas, welches bereits das erste Katalysatorbett 4 sowohl innen als auch außen den Wärmetauscher 7 und die Führungsrohre 30 durchströmt hat.

Unterhalb des ersten Wärmetauschers 7 ist eine weitere Verteilerkammer 17 gasdicht getrennt von der Verteilerkammer 16 vorgesehen, in die das Prozeßgas nach Durchströmen von Führungsrohren 30 des Wärmetauschers 7 gelangt, um von dort dem Katalysatorbett 4 zugeführt zu werden. In diesem Bereich weist das zentrische Rohr 14 öffnungen 18 auf, durch die wenigstens ein Teil des durch das zentrische Rohr 14 strömenden Regelgases in die Verteilerkammer 17 einströmen kann. Über eine Steuerstange 19, die im Bereich der Schlitze 18 einen mit axialen Durchbrechungen versehenen Schließkolben 20 und am unteren freien Ende ein Schließstopfen 21 trägt, läßt, sich die Regelung des Steuergases und eine prozentuale Verteilung von Teilströmen des Steuergases auf die Verteilerkammer 16 und die Verteilerkammer 17 erreichen.

Die Wirkungsweise ist dabei die folgende:

Ist z.B. die Steuerstange 19 ganz nach oben gemäß Doppelpfeil 22 gezogen worden, so verschließt der Stopfen 21 das untere freie Ende des zentrischen Rohres 14, gleichzeitig sind die Schlitze 18 vollständig geöffnet. Das Regelgas strömt nunmehr vollständig durch die Schlitze 18 in den Raum 17, d.h. es vermischt sich mit dem Prozeßgasstrom vor dessen Durchströmen des Katalysatorbettes 4.

Wird nun die Steuerstange 19 nach unten verfahren, öffnet der Schließstopfen 21 in dem Maße die untere Durchtrittsöffnung, in dem die Schlitze 18 verschlossen werden, so daß bei der unteren Todpunktlage die Schlitze 18 vollständig verschlossen sind, während die untere Öffnung des zentrischen Rohres 14 zur Verteilerkammer 16 vollständig geöffnet ist, so daß der gesamte Regelgasstrom sozusagen als by-pass dort zugeführt wird und sich mit dem Prozeßgasstrom mischt, der sowohl das erste Katalysatorbett als auch den Wärmetauscher 7 innen und außen durchströmt hat.

Funktionsmäßig gleiche Teile der folgenden Ausführungsbeispiele tragen die gleiche Bezugsziffer ergänzt durch Kleinbuchstaben:
Bei dem Ausführungsbeispiel gemäß Fig. 2 sind die Verhältnisse grundsätzlich gleich, jedoch mit der Variante, daß das Prozeßgas oben als Teilstrom zentrisch durch einen Rohrstutzen 13a eingeführt wird und ein Teil durch einen Rohrstutzen 11a als kühlendes Mantelgas, welches dann das dritte Katalysatorbett 6a von unten in dessen Mitte durch ein Steigrohr 23 durchströmt, nachfolgend den Zweiten Wärmetauscher 8 und dann in die Mischkammer 17a. Die Verteilung des Steuergases ist hier wiederum in gleicher Weise gelöst, wie beim Ausführungsbeispiel gemäß Fig. 1.

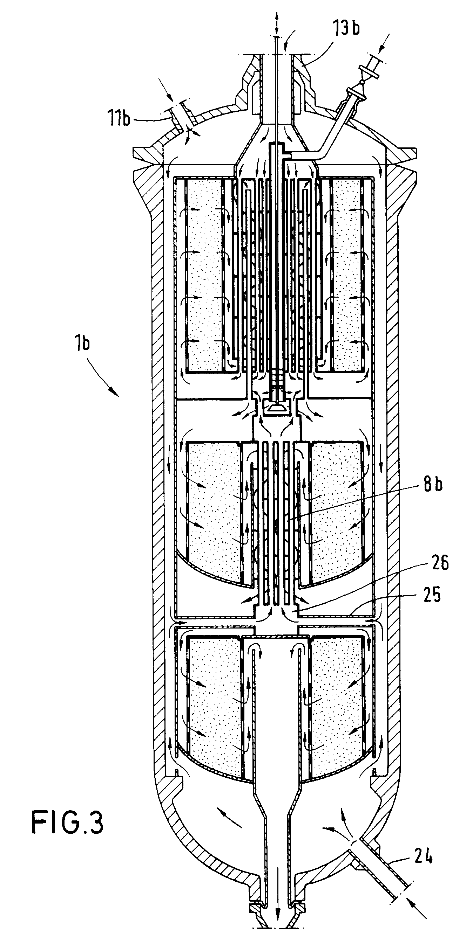

Ähnlich verhält es sich mit dem Ausführungsbeispiel gemäß Fig. 3, hier wird allerdings das Kreislaufgas in drei Teilströmen zugeführt durch einen oberen Zuführstutzen 13b, einen oberen ersten Nantelgaszufübrstutzen 11b sowie zusätzlich durch einen unteren Mantelgaszuführstutzen 24. Hier werden durch radiale Sammelleitungen 25 die Mantelgasströme von oben und unten unterhalb des zweiten Wärmetauschers 8b in einer gemeinsamen Vorkammer 26 gesammelt und nach oben geleitet. Die Zumischung von Regelgas ist hier wiederum gleich gestaltet.

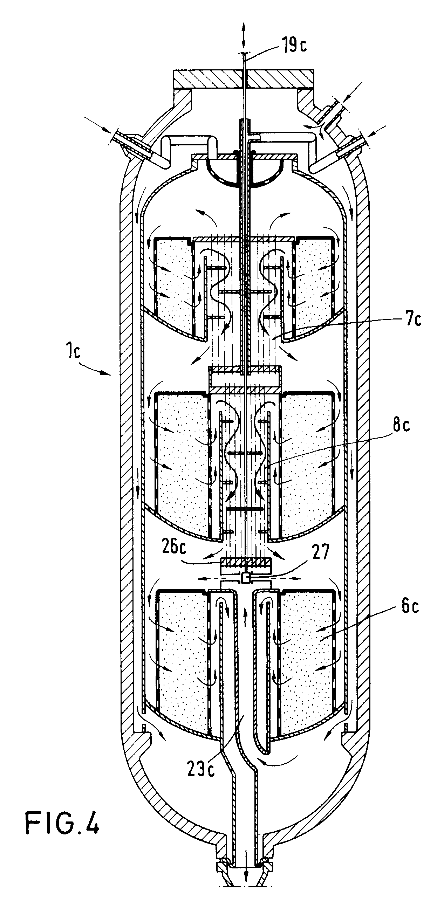

Ein abgewandeltes Ausführungsbeispiel der Steuerung besteht nach Fig. 4 darin, daß dort die Steuerstange 19c den ersten Wärmetauscher 7c und den zweiten Wärmetauscher 8c vollständig durchsetzt und die Zufuhr des von unten über die zentrische Zuführleitung 23c kommenden Mantelgases zu der Vorkammer 26c des zweiten Wärmetauschers 8c regelt. Hier ist z.B. ein Hohlzylindersperrelement vorgesehen, welches das Bezugszeichen 27 trägt. Wird es nach oben angehoben, so gibt es wenigstens einem Teilstrom die Möglichkeit, seitlich auszutreten und sich direkt dem Prozeßgasstrom zuzumischen, der dann das untere und dritte Katalysatorbett 6c beaufschlagt. Ist die Regelstange nach unten verschoben, so läßt der Hohlzylinder 27 nur das Durchströmen des Mantelgases nach oben zu, eine Zumischung ist dann nicht möglich.

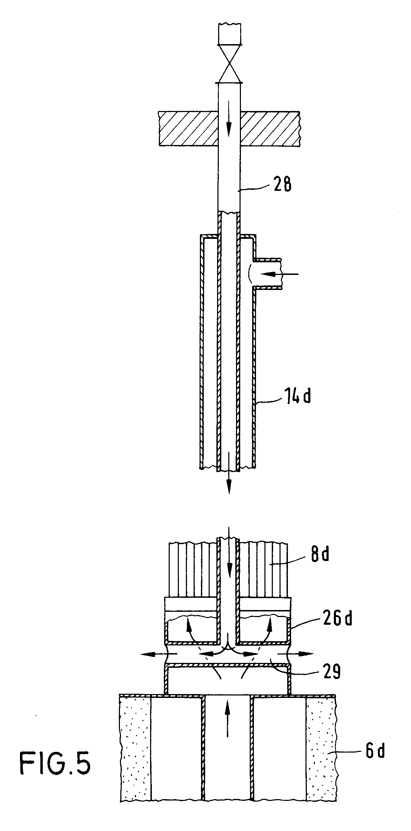

Schließlich zeigt Fig. 5 die Möglichkeit, mehrere Regelgasströme zuzuführen. Dabei ist diese Steuerungsmöglichkeit nur im Prinzip dargestellt. Das zentrische, mit 14d bezeichnete Rohr wird von einem weiteren zentrischen Rohr 28 durchsetzt, und zwar soweit, daß dieses im Bereich der ersten Vorkammer 26d des zweiten Wärmetauschers 8d endet. Hierbei sind radiale Verteilerleitungen 29 vorgesehen, die es ermöglichen, Regelgas demjenigen Gasstrom zuzumischen, der den zweiten Wärmetauscher 8d verläßt und dem dritten Katalysatorbett 6d zugeführt wird.

Natürlich sind die beschriebenen Ausführungsbeispiele der Erfindung noch in vielfacher Hinsicht abzuändern, ohne den Grundgedanken zu verlassen. So kann die Aufschlagregelung der einzelnen Vorkammern durch Kolben/Zylinderelemente z.B. auch bei dem Ausführungsbeispiel gemäß Fig. 5 in Kombination bei den mit den zentrischen Rohren 28 und 14d vorgesehen sein u. dgl. mehr.

**Patentansprüche**

1. Vorrichtung zum Regeln insbesondere eines Ammoniakkonverters mit wenigstens einem vom Prozeßgas zunächst beaufschlagten Wärmetauscher (7) und wenigstens einem vom Prozeßgas nachfolgend beaufschlagten Katalysatorbett (4), wobei das Prozeßgas nach dem Durchströmen des Katalysatorbettes wiederum als Wärmeaustauschgas den Wärmetauscher durchströmt, wobei der Wärmetauscher und um diesen Wärmetauscher herum das erste Katalysatorbett rotationssymmetrisch zu einem zentrischen Rohr (14) angeordnet sind, durch das ein Regelgas für die Temperatursteuerung strömt,
dadurch gekennzeichnet,
daß das zentrische Rohr (14) das Katalysatorbett (4 bzw. 5 bzw. 6) vollständig durchsetzt und an seinem unteren Ende mit regelbaren Auslässen (18) zur wenigstens teilweisen Zumischung des Regelgases in den Prozeßgasstrom vor dessen Durchströmen des Katalysatorbettes (4) und zur Zumischung des Regelgasstromes in den Prozeßgasstrom nach dessen Durchströmen des Katalysatorbettes (4) und des Wärmetauschers (7) versehen ist.

2. Vorrichtung nach Anspruch 1,
dadurch gekennzeichnet,
daß die den Wärmetauscher (7) durchsetzenden Führungsrohre (30) für das Prozeßgas das zentrische, regelbare Rohr (14 oder 28) im Abstand hierzu umgeben.

3. Vorrichtung nach Anspruch 1 oder 2,
dadurch gekennzeichnet,
daß die Verteilungsöffnungen des zentrischen Rohres (14) in Abhängigkeit zueinander synchron steuerbar ausgebildet sind.

4. Vorrichtung nach einem der vorangehenden Ansprüche,
dadurch gekennzeichnet,
daß zur Durchsatzregelung das zentrische Rohr (14) einen mit axialen Durchbrechungen versehenen Schließkolben (20) aufweist, wobei das Durchströmen des Regelgases durch Öffnungen (18) in dem Rohr (14) in einem Strömungskanal (17), in den das Prozeßgas nach dem ersten Durchströmen des Wärmetauschers (7) gelangt, gesteuert werden kann.

5. Vorrichtung nach Anspruch 4,
dadurch gekennzeichnet,
daß das untere freie Ende des zentrischen Rohres (14) in eine Verteilerkammer (16) für das Prozeßgas, welches bereits zum zweiten Mal den Wärmetauscher durchströmt hat, mündet und über ein mit dem Kolben (20) verbundenes Dichtelement (21) vollständig abdichtbar ausgebildet ist.

6. Vorrichtung nach einem der vorangehenden Ansprüche,
dadurch gekennzeichnet,
daß bei mehr als zwei Katalysatorbetten (4-6) mit Wärmetauschern (7,8) das zentrische Rohr (28) und/oder die Betätigung (19c) der regelbaren Auslässe wenigstens einen weiteren Wärmetauscher (8) durchsetzen.

7. Vorrichtung nach Anspruch 6,
dadurch gekennzeichnet,
daß bei einer zentrischen Zuströmung (23) von den Behältermantel (2) kühlendem, kaltem Prozeßgas von unten durch ein drittes Katalysatorbett (6) in die Vorkammer (26) des zweiten Wärmetauschers (8) ein Regelorgan (27) vorgesehen ist, das die Zumischung wenigstens eines Teiles des kälteren Mantelgases in das Prozeßgas vor Eintritt in das dritte Katalysatorbett (6c) ermöglicht.

8. Vorrichtung nach einem der vorangehenden Ansprüche,
dadurch gekennzeichnet,
daß das erste zentrische Rohr (14d) von einem zweiten zentrischen Rohr (28) durchsetzt wird, wobei das zweite zentrische Rohr (28) bis unter den folgenden Wärmetauscher (8) geführt ist und der Zumischung von Regelgas in den Prozeßgasstrom vor dem dritten Katalysatorbett (6) dient.

**Claims**

1. Device for controlling in particular an ammonia converter with at least one heat exchanger (7) on which the process gas acts first and at least one catalyst bed (4) on which the process gas acts subsequently, in which case the process gas flows through the heat exchanger as a heat exchanger gas again after passing through the catalyst bed, and the heat exchanger and the first catalyst bed around this heat exchanger are arranged with rotational symmetry about a central pipe (14), through which a control gas flows for regulating the temperature, characterised in that the central pipe (14) completely penetrates the catalyst bed (4 respectively 5, respectively 6) and is provided at its lower end with adjustable outlets (18) for mixing at least some of the control gas with the process gas stream before this passes through the catalyst bed (4) and through the heat exchanger (7).

2. Device according to claim 1, characterised in that the guide pipes (30) for the process gas penetrating the heat exchanger (7) surround the central, adjustable pipe (14 or 28) with clearance therefrom.

3. Device according to claim 1 or 2, characterised in that the distribution apertures of the central pipe (14) are synchronously adjustable relative to one another.

4. Device according to one of the preceding claims, characterised in that, to control the output, the central pipe (14) has a closing piston (20) provided with axial perforations, and the flow of control gas through apertures (18) in the pipe (14) in a flow channel (17), into which the process gas passes after the first passage through the heat exchanger (7), can be controlled.

5. Device according to claim 4, characterised in that the lower free end of the central pipe (14) opens into a distribution chamber (16) for the process gas, which has already passed through the heat exchanger for the second time, and is completely sealable via a sealing element (21) connected to the piston (20).

6. Device according to one of the preceding claims, characterised in that in the case of more than two catalyst beds (4-6) with heat exchangers (7, 8) the central pipe (28) and/or the actuating mechanism (19c) of the adjustable outlets pass through at least one further heat exchanger (8).

7. Device according to claim 6, characterised in that if there is a central flow (23) of cold process gas cooling the vessel casing (2) from below through a third catalyst bed (6) and into the antechamber (26) of the second heat exchanger (8), a control element (27) is provided, with which it is possible to mix at least some of the cooler casing gas with the process gas before feeding into the third catalyst bed (6c).

8. Device according to one of the preceding claims, characterised in that the first central pipe (14d) is penetrated by a second central pipe (28), and the second central pipe (28) is guided as far as the subsequent heat exchanger (8) and is intended for the mixing of control gas to the process gas stream upstream of the catalyst bed (6).

**Revendications**

1. Dispositif de régulation, en particulier d'un convertisseur d'ammoniac, comprenant au moins un échangeur de chaleur (7) qui est soumis d'abord au gaz du procédé et au moins un lit de catalyseur (4) soumis ensuite au gaz du procédé, le gaz du procédé traversant à nouveau l'échangeur de chaleur en tant que gaz échangeur de chaleur après avoir traversé le lit de catalyseur, l'échangeur de chaleur et le premier lit de catalyseur situé autour de cet échangeur de chaleur étant disposés de façon symétrique en rotation par rapport à un tube central (14) par lequel passe un gaz de régulation destiné à la commande de la température, caractérisé en ce que le tube central (14) traverse totalement le lit de catalyseur (4, 5 ou 6) et est muni à son extrémité inférieure de sorties réglables (18) destinées à un mélange au moins partiel du gaz de régulation avec le courant de gaz du procédé avant son passage à travers le lit de catalyseur (4) et à un mélange du courant de gaz de régulation avec le courant de gaz du procédé après son passage à travers le lit de catalyseur (4) et l'échangeur de chaleur (7).

2. Dispositif selon la revendication 1, caractérisé en ce que les tubes de guidage (30) qui traversent l'échangeur de chaleur (7) et qui sont destinés au gaz du procédé entourent en étant séparés le tube central réglable (14 ou 28).

3. Dispositif selon la revendication 1 ou 2, caractérisé en ce que les ouvertures de distribution du tube central (14)) sont constituées de manière à être commandées en synchronisme en fonction les unes des autres.

4. Dispositif selon l'une quelconque des revendications précédentes, caractérisé en ce qu'en vue d'une régulation du débit, le tube central (14) comprend un piston de fermeture (20) muni de passages axiaux, le passage du gaz de régulation pouvant être dirigé par les ouvertures (18) du tube (14) dans un canal d'écoulement (17) dans lequel le gaz du procédé parvient après son premier passage par l'échangeur de chaleur (7).

5. Dispositif selon la revendication 4, caractérisé en ce que l'extrémité inférieure libre du tube central (14) débouche dans une chambre distributrice (16) du gaz de procédé qui a déjà passé pour la deuxième fois dans l'échangeur de chaleur et est constituée de façon à être totalement étanche au moyen d'un élément d'étanchéité (21) relié au piston (20).

6. Dispositif selon l'une quelconque des revendications précédentes, caractérisé en ce que dans le cas où sont prévus plus de deux lits de catalyseur (4-6) avec des échangeurs de chaleur (7, 8) le tube central (28) et/ou le dispositif d'actionnement (19c) des sorties réglables traverse au moins un autre échangeur de chaleur (8).

7. Dispositif selon la revendication 6, caractérisé en ce que dans le cas d'une arrivée centrale (23) du gaz de procédé froid et qui refroidit l'enveloppe (2) du récipient parvenant par le bas et qui passe par un troisième lit de catalyseur (6), vers l'avant-chambre (26) du second échangeur de chaleur (8), on prévoit un organe de régulation (27) permettant le mélange d'au moins une partie du gaz d'enveloppe plus froid avec le gaz du procédé avant l'entrée dans le troisième lit de catalyseur (6c).

8. Dispositif selon l'une quelconque des revendications précédentes, caractérisé en ce que le premier tube concentrique (14d) est traversé par un deuxième tube central (28), ce deuxième tube central (28) se prolongeant au-dessous de l'échangeur de chaleur suivant (8) et servant au mélange du gaz de régulation avec le courant de gaz de procédé avant le troisième lit de catalyseur (6).

FIG.1

FIG.2

FIG.3

FIG.4

28

14 d

8 d

26 d

29

6 d

FIG.5